Europäisches Patentamt

European Patent Office

Office européen des brevets

(11) Veröffentlichungsnummer: **0 065 091**
A2

# EUROPÄISCHE PATENTANMELDUNG

(21) Anmeldenummer: 82102256.3

(22) Anmeldetag: **19.03.82**

(51) Int. Cl.³: **A 45 C 7/00**, B 62 B 1/12,
A 45 C 13/38

(30) Priorität: 15.05.81 DE 3119337

(43) Veröffentlichungstag der Anmeldung: **24.11.82**
**Patentblatt 82/47**

(84) Benannte Vertragsstaaten: **CH FR GB IT LI NL**

(71) Anmelder: **LEIFHEIT INTERNATIONAL GmbH,
Leifheitstrasse, D-5408 Nassau/Lahn (DE)**

(72) Erfinder: **Ohm, Heinz, Grosser Ring 5,
D-6250 Limburg 9 (DE)**
Erfinder: **Pätzold, Dieter, Scheubachweg 7,
D-5408 Nassau/Lahn (DE)**

(54) **Faltbare Tasche für Einkaufsroller.**

(57) Die Tasche ist innenseitig mit einer zweiteiligen Versteifungsplatte, die einseitig an den Taschenseitenteilen vernietet ist, versehen, wobei die Versteifungsplatte im Übergangsbereich zwischen Taschenseitenteilen und Boden mit einer Falzung zum Hochklappen versehen ist und etwa in Bodenmitte kraftschlüssig, aber lösbar über eine Zungengabelverbindung verbunden ist.

EP 0 065 091 A2

LEIFHEIT
INTERNATIONAL
GÜNTER LEIFHEIT GmbH
5408 NASSAU/LAHN

Faltbare Tasche für Einkaufsroller

Die Erfindung bezieht sich auf eine faltbare Tasche für Einkaufsroller aus elastischem Material, die innenseitig am Boden und an
den beiden seitlichen Stirnwänden mit einer geknickten Versteifungsplatte versteift ist.

Diese Taschen werden meistens über eine Schlaufe an einem Hauptrahmen des Einkaufsrollers eingehängt und stehen auf einem Auflagerahmen, der die Kräfte in das Fahrwerk überträgt, auf. Durch das einfache Trennen der Tasche vom Fahrgestell kann diese auch leicht
separat genutzt werden. Sowohl beim Versand aus der Fabrik als auch
im Haushalt stellt diese Einheit ein relativ sperriges Produkt dar.
Es ist deshalb erwünscht, sowohl das Gerät als auch insbesondere die
Tasche klapp- beziehungsweise faltbar auszulegen.

Es ist eine faltbare Tasche für Einkaufsroller gemäß dem Oberbegriff
des Patentanspruchs 1 bekannt ( Deutsche Offenlegungsschrift 26 32 7o2),
bei der über Falzungen eine Versteifungsplatte faltbar am Boden und
an den seitlichen Stirnwänden angebracht ist. Zum Falten der Tasche
können die seitlichen Teile der Versteifungsplatte von der Tasche gelöst werden und werden dann nach innen auf den Boden gelegt. Dadurch
läßt sich die Tasche in senkrechter Richtung auf den Boden falten.

Dadurch, daß sie seitlichen Versteifungsplatten auf den Boden gelegt
werden, können sie nur maximal eine Höhe, die der Breite des Bodens
entspricht,haben. Der obere Bereich der Tasche bleibt ohne seitliche
Versteifung. Hinzu kommt, daß bei der Faltung der Tasche diese in
vertikaler Richtung gefaltet werden muß und somit mehrere Knickstellen
notwendig werden. Dies bedingt ein besonders weiches elastisches Material für die Tasche. Ein etwas steiferes Material läßt sich praktisch
nicht in dieser Art falten oder es entstehen häßliche Knitterfalten.

Hier will die Erfindung Abhilfe schaffen. Die Erfindung, wie sie in den Ansprüchen gekennzeichnet ist, löst die Aufgabe, eine Tasche für Einkaufsroller aus elastischen Material derart auszusteifen, daß sie im Gebrauchszustand auch unter Belastung ohne wesentliche seitlichen Ausbeulungen auf dem Fahrgestell steht, das heißt insbesondere keine Ausbeulungen im Bereich der Räder, und daß andererseits die Tasche beim Versand beziehungsweise bei der Aufwahrung flach faltbar mit nur einer Knitterfalte zusammenlegbar ist.

Die durch die Erfindung erreichten Vorteile sind im Wesentlichen darin zu sehen, daß der Übergangsbereich Seitenteil zum Boden besonders gut ausgesteift ist, die Tasche aber dennoch in horizontaler Richtung gefaltet werden kann, wodurch nur jeweils eine Knitterfalte in den Seitenteilen und im Boden notwendig wird. Die Handhabung bleibt nach wie vor sehr einfach und ist nicht erklärungsbedürftig.

Im folgenden wird die Erfindung an Hand von lediglich einem Ausführungsbeispiel näher erläutert. Es zeigt

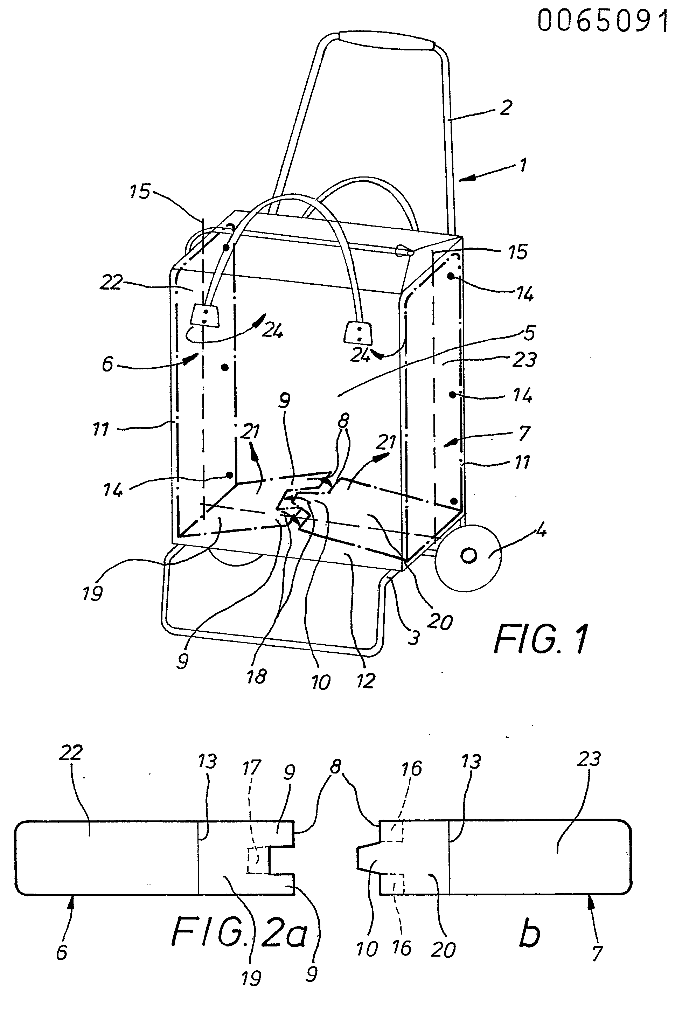

Figur 1 in perspektivischer Darstellung eine erfindungsgemäße Tasche auf einem Fahrgestell mit Hauptrahmen und Auflagerahmen, wobei die Versteifungsplatte strichpunktiert dargestellt ist und

Figur 2 a,b die zwei Teile der Versteifungsplatte im Zuschnitt.

Auf einem schematisch dargestellten Fahrgestell 1 mit einem senkrecht angeordneten Hauptrahmen 2 und einem an dessen unterem Ende vorgesehenen Auflagerahmen 3 mit Fahrwerk 4 ist eine Tasche 5 aufgesetzt. Die Tasche 5 besteht aus elastischem Material und ist innen mit einer Versteifungsplatte, die aus zwei Teilen 6 und 7 besteht, ausgesteift. Die Versteifungsplatte 6, 7 ist etwa in Bodenmitte mit einer Trennung 8 versehen, wobei das eine Teil 6 in Form einer Gabel 9 und das andere Teil 7 mit einer Zunge 1o ausgeführt sind. Im Übergangsbereich zwischen Taschenseitenteil 11 und Boden 12 sind die Teile 6, 7 mit einer Falzung 13 versehen. Diese Falzung 13 stellt die Faltkannte dar. Die Teile 6, 7 der Versteifungsplatte sind an den Taschenseitenteilen 11 einseitig durch Nieten 14 oder ähnliche Verbindungsmittel befestigt. Mit 15 ist die Knitterfalte an der Tasche 5 gekennzeichnet. Zum bestimmungsgemäßen Gebrauch der Tasche wer-

0065091

den die beiden Gabelteile 9 unter die Bereiche 16 des Teils 7 und die
Zunge 1o unter den Bereich 17 des Teiles 6 gedrückt. Der Bewegungsablauf
ist zusätzlich durch die kleinen Pfeile 18 gekennzeichnet.

Soll nun die Tasche zusammengefaltet werden, so werden die Bodenteile
19 und 2o in Pfeilrichtung 21 jeweils an die Seitenteile 22 und 23 geklappt. Anschließend wird das Paket 19, 22 und 2o, 23 unter gleichzeitiger Faltung der Tasche entlang der Knitterfalte 15 in Pfeilrichtung
24 nach hinten gedrückt.

Bezugszeichenliste:

**Faltbare Tasche für Einkaufsroller**

1 Fahrgestell

2 Hauptrahmen

3 Auflagerrahmen

4 Fahrwerk

5 Tasche

6 Teil ⎫
⎬ Versteifungsplatte
7 Teil ⎭ ,

8 Trennung

9 Gabel

1o Zunge

11 Taschenseitenteil

12 Boden

13 Falzung

14 Niete

15 Knitterfalte

16 Bereiche

17 Bereich

18 Pfeile

19 Bodenteil

2o Bodenteil

21 Pfeilrichtung

22 Seitenteil

23 Seitenteil

24 Pfeilrichtung

Patentansprüche

1. Faltbare Tasche für Einkaufsroller aus elastischem Material, die innenseitig am Boden und an den beiden Taschenseitenteilen mit einer geknickten Versteifungsplatte aus zwei Teilen (6, 7) besteht, wobei die Trennung (8) etwa mittig am Boden (12) erfolgt, und daß die Trennung (8) mit Mitteln (9, 1o) zur kraftschlüssigen Verbindung beider Teile (6, 7) ausgeführt ist.

2. Faltbare Tasche nach Anspruch 1, dadurch gekennzeichnet, daß die Verbindung als Zungen- Gabelverbindung ausgeführt ist.

3. Faltbare Tasche nach Anspruch 2, dadurch gekennzeichnet, daß die Zunge (1o) konisch ausgeführt ist.

0065091

FIG. 1

FIG. 2a    b